# EUROPÄISCHE PATENTSCHRIFT

(11) **EP 4 096 865 B1**
(45) Veröffentlichungstag und Bekanntmachung des Hinweises auf die Patenterteilung: **31.01.2024**
(21) Anmeldenummer: 20829184.9
(22) Anmeldetag: 04.12.2020
(51) Int. Cl.: B24B 39/02, E01B 31/13

(54) **REPROFILIERUNGSVERFAHREN AN ZUMINDEST EINER SCHIENE**
METHOD FOR REPROFILING AT LEAST ONE RAIL
PROCÉDÉ DE REPROFILAGE D'AU MOINS UN RAIL

(30) Priorität: 04.12.2019 AT 510562019
(43) Veröffentlichungstag der Anmeldung: 07.12.2022
(73) Patentinhaber: MATE GmbH, 4656 Kirchham bei Vorchdorf (AT)
(72) Erfinder: HOFMANN, Stefan, 4662 Steyrermühl (AT)
(74) Vertreter: Burger, Hannes
(86) Internationale Anmeldenummer: PCT/AT2020/060432
(87) Internationale Veröffentlichungsnummer: WO 2021/108826

(56) Entgegenhaltungen:
- EP-A1- 0 465 683
- AT-A4- 521 163
- AT-B- 391 285
- DE-A1- 2 920 889

## Beschreibung

Die Erfindung betrifft ein Verfahren zum Reprofilieren zumindest einer Schiene zumindest im Abschnitt ihrer am Schienenkopf befindlichen Lauffläche.

Beim Reprofilieren von Gleisschienen durch einen Fräsvorgang mit einem mehrspurigen Fräsmesserkopf entstehen in den einzelnen Frässpuren sogenannte Fräswellungen. Dabei handelt es sich um periodische Muster von in Fahrtrichtung abwechselnden Erhöhungen und Vertiefungen, welche zwar kaum sichtbar sind, aber dennoch beseitigt werden müssen. Dies kann beispielsweise durch Schleifen oder Rutschen von Schleifsteinen erfolgen. Es können aber auch Bandschleifer oder Stirnfräser dazu eingesetzt werden. Es hat sich durch Messungen herausgestellt, dass diese Fräswellungen, wenn sie nicht beseitigt werden, einen signifikanten Effekt auf die Lärmbelastung der auf den Schienen fahrenden Eisenbahn hat. Insbesondere wurde herausgefunden, dass die Form und Anordnung und ggf. die Periodenlänge dieser Wellungen eine messbare Wirkung auf die schallabgebenden Eigenschaften der Gleisschienen haben. Gemäß der Norm EN 13231 wäre eine Wellung in bestimmten Grenzen zulässig, jedoch in der Praxis traten dabei im Fahrbetrieb, insbesondere bei höheren Fahrgeschwindigkeiten, zu hohe Lärmbelastungen auf.

Das Reprofilieren des Schienenkopfs kann entweder dadurch erfolgen, dass die Bearbeitungseinheit mit deren Bearbeitungsaggregaten ortsfest ist und die zu bearbeitende Schiene relativ dazu bewegt wird oder dass die Schienen bereits in einem daraus gebildeten Schienenstrang in einer Gleisbettung verlegt sind und das Bearbeitungsfahrzeug mit der Bearbeitungseinheit entlang des verlegten Schienenstrangs verfahren wird und dabei die Bearbeitung durchgeführt wird.

In der DE 29 20 889 A1 ist ein Verfahren zum Kaltwalzen von Bauteilen mit einer Walzkraft ungleich Null offenbart, wobei die Walzkraft mit einer variierenden Frequenz und Amplitude pulsiert, wobei die tiefsten Stellen aus einem Maimalwert herrührenden Eindrücke der Walzwerkzeuge, soweit sie bei statischer Belastung entstehen würden, in einem Abstand aufeinander folgen, der nicht größer als eine doppelte Eindruckbreite selbst ist.

In der EP 0 465 683 A1 ist ein Verfahren zum mechanischen Behandeln der Lauffläche von Schienen für Schienenfahrzeuge gegen Riffelbildung offenbart, wobei die Schienenoberfläche zumindest im Bereich der Lauffläche mit einem Almenwert verfestigungsgestrahlt wird, der der Formel *A* = *BxZ*² + *C* genügt, wobei die Verfestigungsstrahlung bei Umgebungstemperatur erfolgt.

Die AT 391 285 B offenbart eine Vorrichtung zum Verdichten und Verfestigen von Schienenteilen, mit welcher Schlagkräfte intermittierend aufgebracht werden, wobei eine Mehrzahl von Hammerwerkzeugen in einem Gemeinsamen Werkzeugträger zu intermittierenden Schlaghüben antreibbar gelagert ist und weiters ein Widerlager zum Festlegen des zu bearbeitenden Schienenteils vorgesehen ist. Der Werkzeugträger und/oder das Widerlager sind in Längsrichtung einer Lauffläche des Schienenteils relativ zueinander beweglich gelagert und reversierbar antreibbar, wobei die Hammerwerkzeuge mit der Kontur der Oberfläche des Schienenteils in den zu behandelnden Bereichen der Oberfläche entsprechenden Schlagstücken lösbar verbunden sind.

Die AT 521 163 A4 der gleichen Anmelderin beschreibt ein Verfahren und eine Vorrichtung zum Bearbeiten der Lauffläche einer Schiene mit Hilfe wenigstens einem entlang der Schiene bewegbaren und wenigstens an deren Lauffläche andrückbaren, rotierenden, spanabhebenden Formgebungswerkzeug. Weiters wird dabei nach der Bearbeitung mit dem spanabhebenden Formgebungswerkzeug wenigstens ein der formbearbeiteten Schienenoberfläche angepasster Rollkörper zwecks Einebnung von Unebenheiten der Lauffläche der Schiene, unter Kaltverformung der Lauffläche der Schiene über die Schiene gerollt. Der als Walze wirkende Rollkörper rollt mit seinem Mantel auf der Lauffläche der Schiene ständig angedrückt ab, wobei die Erzeugende der auf der Lauffläche um eine Achse abrollenden Mantelfläche, dem Querschnitt einer formbearbeiteten, also bereits reprofilierten Schienenoberfläche entspricht. Von dem Rollenkörper wird während der Fahrbewegung ein konstant hoher Kontaktdruck auf die Schiene ausgeübt. Durch den hohen Kontaktdruck kommt es bei entsprechend kleiner Kontaktfläche mit der Schiene zu einer die gewünschte Kaltverformung verursachenden Pressung. Dieses Verfahren hat sich in der Praxis grundsätzlich bewährt, konnte jedoch wegen des aufzubringenden hohen Kontaktdrucks nicht bei allen Typen von Bearbeitungsmaschinen angewendet werden. Der mögliche Kontaktdruck ist dabei im Wesentlichen von der Eigenmasse der jeweiligen Bearbeitungsmaschine abhängig.

Es wurde dazu auch in der EP 1 820 902 A1 der gleichen Anmelderin ein Verfahren zum Fräsen von Schienenköpfen der in einer Bettung verlegten Gleisschienen mittels einer verfahrbaren Vorrichtung zum Fräsen vorgeschlagen. Die Fräsvorrichtung umfasst einen rotierend angetriebenen Fräsmesserkopf, der in einem Fräsmesserkopfantrieb enthaltenden Fahrwerk gelagert ist. Der Fräsmesserkopf wird der Höhe und/oder der Seite nach mit Führungsmittel entlang des zu bearbeitenden Schienenkopfes geführt, wobei der Fräsmesserkopf mehrere in Umfangsrichtung des Fräsmesserkopfs hintereinander angeordnete Sätze von Messerkopfschneiden aufweist. Jeder Satz an Messerkopfschneiden bildet das zu bearbeitende Profil des Schienenkopfes in annähern kreisförmigen Teilbögen verschiedener Radien nach. Dabei sollte eine Nachbearbeitung der beim Fräsvorgang gebildeten Welligkeit vermieden werden. Dies konnte jedoch im Praxisbetrieb ganz selten und nur bei optimalsten Bedingungen erzielt werden. Damit waren zumeist aber sehr lange Bearbeitungszeiten erforderlich und so auch längere Sperren des zu bearbeitenden Schienenstrangs bzw. verlegten Gleises damit verbunden. Um die Bearbeitungszeiten wiederum zu verkürzen, wurde eine zusätzliche Nachbearbeitung der Lauffläche wiederum erforderlich.

Der zumeist angewendete Nachbearbeitungsschritt des Schleifens ist jedoch mit einigen Nachteilen behaftet. Es kann beim Schleifen ein Funkenflug auftreten und damit verbunden eine Brandauslösung stattfinden. Weiters war es nicht einfach, den dabei entstehenden Schleifstaub abzusaugen, wodurch die Umweltbelastung in einem gewissen Ausmaß erhöht wurde. Darüber hinaus stellte die Staubbelastung für das Bedienpersonal des Bearbeitungsfahrzeugs auch ein zusätzliches Gesundheitsrisiko dar. Der Schleifvorgang führt im Schienenwerkstoff des bearbeiteten Oberflächenabschnitts zu einer Martensitbildung, wodurch die Bruchgefahr des geschliffenen Oberflächenabschnitts erhöht wird.

Aufgabe der vorliegenden Erfindung war es, die Nachteile des Standes der Technik zu überwinden und eine ein Verfahren zur Reprofilierung von Schienen Verfügung zu stellen, mit dem eine verkürzte Bearbeitungszeit bei geringer Oberflächenwelligkeit erzielt werden kann.

Diese Aufgabe wird durch ein Reprofilierungsverfahren gemäß den Ansprüchen gelöst.

Das erfindungsgemäße Verfahren dient zur Reprofilierung zumindest einer Schiene eines verlegten und von den Schienen gebildeten Schienenstrangs, wobei die Bearbeitung zumindest im Abschnitt ihrer am Schienenkopf befindlichen Lauffläche erfolgt. Dabei sind folgende Schritte vorgesehen:
- Bereitstellen eines Bearbeitungsfahrzeugs, wobei das Bearbeitungsfahrzeug entlang des Schienenstrangs verfahrbar ist,
- Bereitstellen einer Bearbeitungseinheit, wobei die Bearbeitungseinheit am Bearbeitungsfahrzeug angeordnet ist und die Bearbeitung der zu bearbeitenden Lauffläche während des Verfahrens des Bearbeitungsfahrzeugs durchgeführt wird, die Bearbeitungseinheit umfasst
   - zumindest ein erstes Bearbeitungsaggregat mit zumindest einem rotierend angetriebenen, spanabhebenden Bearbeitungswerkzeug, wobei das zumindest eine Bearbeitungswerkzeug als Fräsrad oder Fräsmesserkopf mit einer Vielzahl an umfänglich hintereinander angeordneten sowie entlang des zu reprofilierenden Schienenkopfprofils ausgerichteten Messerkopfschneiden ausgebildet ist,
   - zumindest ein zweites Bearbeitungsaggregat,
- Bearbeiten des Schienenkopfs im Abschnitt von dessen Lauffläche in einem ersten Bearbeitungsschritt mittels des zumindest einen spanabhebenden Bearbeitungswerkzeugs, wobei im ersten Bearbeitungsschritt der Werkstoffabtrag in einem Fräsvorgang durchgeführt wird, und bei diesem Werkstoffabtrag in Richtung der Längserstreckung der Schiene eine Oberflächenwelligkeit mit Wellenbergen und Wellentälern ausgebildet wird, und in einem nachfolgenden zweiten Bearbeitungsschritt mittels des zweiten Bearbeitungsaggregats die Oberflächenwelligkeit reduziert und/oder modifiziert wird,
- wobei bei der Reduzierung der Oberflächenwelligkeit im zweiten Bearbeitungsschritt zumindest die Wellenberge plastisch umgeformt und eingeebnet werden, und
- wobei die plastische Umformung zumindest der Wellenberge mittels zumindest einer in Richtung auf die zu bearbeitende Lauffläche gerichtete Umformkraft durchgeführt wird, und dabei weiters vorgesehen ist,
- dass die zumindest eine Umformkraft pulsierend aufgebracht wird und dabei das Material der Schiene geringfügig verlagert wird und dass im zweiten Bearbeitungsschritt keine ständige Auflage eines Bearbeitungswerkzeugs des zweiten Bearbeitungsaggregats an der zu bearbeitenden Lauffläche erfolgt.

Bei diesem Vorgehen ist vorteilhaft, dass so mit einer wirtschaftlichen und damit verkürzten Bearbeitungszeit die Reprofilierung durchgeführt wird. So stehen die Schienen nach einer kürzeren Bearbeitungszeit wieder für den Einbau und den damit verbundenen Fahrbetrieb zur Verfügung. Weiters wird so aber auch die ansonsten auftretende Staubbelastung vermieden und trotzdem die beim Fräsvorgang gebildete Oberflächenwelligkeit der Lauffläche reduziert. Damit wird wiederum die ansonsten im Fahrbetrieb entstehende Lärmbelastung erheblich vermindert. Durch die plastische Umformung zumindest der Wellenberge oder Erhebungen im Längsprofil der Lauffläche kommt es zu einer Oberflächenverfestigung und damit verbunden zu einer nachfolgenden längeren Einsatzdauer.

Da ein Bearbeitungsfahrzeug bereitgestellt wird und die Bearbeitungseinheit am Bearbeitungsfahrzeug angeordnet ist, und das Bearbeitungsfahrzeug entlang eines verlegten und von Schienen gebildeten Schienenstrangs entlang desselben verfahrbar ist, wird die Bearbeitung der zu bearbeitenden Lauffläche während des Verfahrens des Bearbeitungsfahrzeugs durchgeführt.

Bei diesem Vorgehen ist vorteilhaft, dass so mit einer wirtschaftlichen und damit verkürzten Bearbeitungszeit die Reprofilierung durchgeführt wird und die Sperre des zu bearbeitenden Schienenstrangs verkürzt wird. So steht der Schienenstrang nach kürzerer Zeit wieder für den vorgesehenen Fahrbetrieb zur Verfügung. Weiters wird so aber auch die ansonsten auftretende Staubbelastung vermieden und trotzdem die beim Fräsvorgang gebildete Oberflächenwelligkeit der Lauffläche reduziert und/oder modifiziert. Damit wird wiederum die ansonsten im Fahrbetrieb entstehende Lärmbelastung erheblich vermindert. Durch die plastische Umformung zumindest der Wellenberge oder Erhebungen im Längsprofil der Lauffläche kommt es zu einer Oberflächenverfestigung und damit verbunden zu einer nachfolgenden längeren Einsatzdauer der Schiene.

Weiters wird die zumindest eine Umformkraft pulsierend aufgebracht. Das pulsierende Aufbringen der Umformkraft hat den Vorteil, dass keine ständige Auflage des Bearbeitungswerkzeugs des zweiten Bearbeitungsaggregats an der zu bearbeitenden Lauffläche erfolgt. Damit wird mit einer geringeren Vortriebskraft bzw. mit einer geringeren Antriebsleistung das Bearbeitungsfahrzeug weiterbewegt.

Vorteilhaft ist auch eine Verfahrensvariante, bei welcher zumindest ein Führungsmittel zur Führung zumindest eines der Bearbeitungsaggregate der Höhe und/oder der Seite nach relativ bezüglich des zu bearbeitenden Schienenkopfs vorgesehen ist. Durch das Vorsehen zumindest eines Führungsmittels wird die Möglichkeit geschaffen, zumindest eines der Bearbeitungsaggregate für die Durchführung des Reprofilierungsvorgangs an die vorgegebenen geometrischen Abmessungen der Schiene anpassen und führen zu können. Bevorzugt wird jedem der Bearbeitungsaggregate ein eigenes Führungsmittel zugeordnet, wodurch eine höhere Führungsgenauigkeit und damit verbunden eine exaktere Reprofilierung des Schienenkopfes im Bereich seiner Lauffläche durchgeführt werden kann.

Eine andere Vorgehensweise zeichnet sich dadurch aus, wenn die zumindest eine Umformkraft in einer normalen Ausrichtung auf die zu bearbeitende Lauffläche aufgebracht wird. Damit kann eine gleichmäßige Umformung zumindest der umzuformenden Wellenberge bzw. Erhebungen während des zweiten Bearbeitungsschritts durchgeführt werden. Weiters kann damit die Ebenheit bzw. die Abweichung von einer geradlinig verlaufenden Solllinie oder Sollebene minimiert werden.

Vorteilhaft ist auch eine Verfahrensvariante, bei welcher die zumindest eine pulsierend aufgebrachte Umformkraft aus einem Kraft-Wertebereich stammt, dessen untere Grenze 20 N, insbesondere 150 N, und dessen obere Grenze 80 kN, insbesondere 1,5 kN, beträgt.

Je nach gewähltem Verfahren und den gewählten Mitteln zur Aufbringung der pulsierenden Umformkraft können z.B. Kraft-Wertebereiche mit einer unteren Grenze von 20 N und einer oberen Grenze von 50 N, oder mit einer unteren Grenze von 150 N und einer oberen Grenze von 1,5 kN, oder mit einer unteren Grenze von 20 kN und einer oberen Grenze von 80 kN gewählt werden.

Durch die Festlegung eines vorbestimmten Kraft-Wertebereichs kann das Ausmaß der Umformung an der Schienenoberfläche an die jeweiligen Gegebenheiten nach dem Fräsvorgang angepasst werden.

Eine andere Vorgehensweise zeichnet sich dadurch aus, wenn die zumindest eine pulsierend aufgebrachte Umformkraft mit einer schwellenden Intensität aufgebracht wird. Mit der schwellenden Intensität der Umformkraft in gewissen vorgegebenen Grenzen kann während der Einebnung der Schienen-Lauffläche eine variable Anpassung an unterschiedliche Einsatzbedingungen erzielt werden.

Weiters ist ein Vorgehen vorteilhaft, bei dem die zumindest eine pulsierend aufgebrachte Umformkraft mit einer Frequenz aufgebracht wird, welche aus einem Frequenz-Wertebereich stammt, dessen untere Grenze 100 Hertz (Hz), insbesondere 500 Hertz (Hz), und dessen obere Grenze 25 Kilohertz (kHz), insbesondere 3 Kilohertz (kHz), beträgt.

Je nach gewähltem Verfahren und den gewählten Mitteln zur Aufbringung der pulsierenden Umformkraft können z.B. Frequenz-Wertebereiche mit einer unteren Grenze von 100 Hertz (Hz) und einer obere Grenze 350 Hertz (Hz), oder mit einer unteren Grenze von 500 Hertz (Hz) und einer obere Grenze von 3 Kilohertz (kHz), oder aber auch mit einer unteren Grenze von 5 Kilohertz (kHz) und einer oberen Grenze von 25 Kilohertz (kHz) gewählt werden.

Damit kann in vorbestimmten Grenzen die Schlagzahl an die zu bearbeitende Welligkeit besser angepasst werden.

Eine weitere vorteilhafte Vorgehensweise ist dadurch gekennzeichnet, dass die zumindest eine pulsierend aufgebrachte Umformkraft mit einer gleichmäßigen Frequenz oder mit einer sich ändernden Frequenz aufgebracht wird. Damit kann je eine Überlagerung von Schwingungen leichter verhindert werden.

Eine weitere vorteilhafte Vorgehensweise ist dadurch gekennzeichnet, dass das zweite Bearbeitungsaggregat zumindest ein Umformwerkzeug umfasst. Durch das Ausstatten des zweiten Bearbeitungsaggregats mit zumindest einem Umformwerkzeug kann so in Art einer Hammerbewegung die aufzubringende Umformkraft auf die zu bearbeitende Lauffläche des Schienenkopfes aufgebracht werden.

Vorteilhaft ist auch eine Verfahrensvariante, bei welcher das zumindest eine Umformwerkzeug eine der Lauffläche des zu bearbeitenden Schienenkopfs zugewendete Arbeitsfläche aufweist, welche Arbeitsfläche mit einer Längserstreckung ausgebildet ist, welche sich über zumindest zwei, bevorzugt über zumindest drei, in Richtung der Längserstreckung unmittelbar hintereinander befindliche Wellenberge erstreckt. Durch die gewählte Mindestlänge der Arbeitsfläche kann so während der Bearbeitung eine sich über mehrere Wellenberge erstreckende Auflage der Arbeitsfläche sichergestellt werden. Damit kann eine bessere und gleichmäßigere Einebnung zumindest der umzuformenden Wellenberge erzielt werden.

Eine andere Vorgehensweise zeichnet sich dadurch aus, wenn mehrere Umformwerkzeuge vorgesehen sind und die Umformwerkzeuge zueinander versetzt über den zu bearbeitenden Profilquerschnitt verteilt angeordnet sind. Damit wird die Möglichkeit geschaffen, in einem Arbeitsgang einen größeren Abschnitt des Profilquerschnitts im zweiten Bearbeitungsschritt bearbeiten zu können.

Weiters ist ein Vorgehen vorteilhaft, bei dem eine Vielzahl von Umformwerkzeugen vorgesehen ist und jedes der Umformwerkzeuge mit einem kalottenförmig ausgebildeten Hammerkopf versehen ist. Durch die Wahl einer Vielzahl an Umformwerkzeugen, welche bevorzugt stift- oder nadelförmig ausgebildet sind, kann so eine noch individuellere Einebnung zumindest der Wellenberge durchgeführt werden.

Eine weitere vorteilhafte Vorgehensweise ist dadurch gekennzeichnet, dass ein maximaler Umformweg der Vielzahl von Umformwerkzeugen zumindest noch vor dem Erreichen des Wellentals endet. Der maximale Umformweg der Vielzahl von Umformwerkzeugen kann aber auch am Wellental enden. Weiters kann sich der maximale Umformweg der Vielzahl von Umformwerkzeugen über das Wellental hinaus in Richtung auf einen Schienenfuß in das Material des Schienenkopfes der Schiene hinein erstrecken. Durch das Festlegen und Begrenzen des maximalen Umformweges der Vielzahl an Umformwerkzeugen kann so der im zweiten Bearbeitungsschritt zu bearbeitende Oberflächenabschnitt der Lauffläche exakt vorbestimmt und festgelegt werden. Weiters kann damit auch der Umformgrad der Wellenberge besser vorherbestimmt werden.

Vorteilhaft ist auch eine Verfahrensvariante, bei welcher die pulsierende Umformkraft mittels eines Strahlverfahrens und einer Vielzahl an Strahlkörpern auf die zu bearbeitende Lauffläche aufgebracht wird. Damit kann ebenfalls eine mechanische Umformwirkung zumindest auf die einzuebnenden Wellenberge bzw. Erhebungen aufgebracht werden. Durch die Bewegung der Strahlkörper, welche z.B. von Kugeln oder dergleichen Körper gebildet sein können, enthalten diese ein gewisses Ausmaß an kinetischer Energie, welche beim Auftreffen der einzelnen Strahlkörper auf die zu bearbeitende Oberfläche bzw. Lauffläche der Schiene zum größten Anteil in die aufzubringende Umformkraft umgewandelt wird.

Eine andere Vorgehensweise zeichnet sich dadurch aus, wenn die Strahlkörper nach dem Umformvorgang mittels einer Sammeleinheit, insbesondere einer Saugvorrichtung, aufgesammelt werden. Damit kann eine Wiederverwendung von bereits verwendeten Strahlkörpern für einen neuerlichen Behandlungsvorgang ermöglicht werden. Darüber hinaus wird so aber auch eine Ablagerung und damit verbundene mögliche Umweltbelastung im Bereich des Schienenstrangs weitgehendst minimiert.

Eine weitere vorteilhafte Vorgehensweise ist dadurch gekennzeichnet, dass die Amplitude der Oberflächenwelligkeit in normaler Richtung auf die Längserstreckung der bearbeiteten Lauffläche auf einen Amplituden-Wert verringert wird, der aus einem Amplituden-Wertbereich stammt, dessen untere Grenze 0,001 mm, insbesondere 0,004 mm, und dessen obere Grenze 0,01 mm, insbesondere 0,008 mm, beträgt. Damit kann durch den zweiten Bearbeitungsschritt trotz des zuvor erfolgten Abtragvorgangs mittels eines Radfräsers eine sehr geringe Oberflächenwelligkeit erzielt werden. Damit kann die Lärmbelastung, welche im Fahrbetrieb von Eisenbahnfahrzeugen entsteht, in einem hohen Ausmaß reduziert werden. Die AmplitudenWerte sollen so gewählt und in einer solchen Grenze eingeebnet werden, dass diese unterhalb der zur akustischen Emission beitragenden periodischen Oberflächenstruktur liegt.

Vorteilhaft ist auch eine Verfahrensvariante, bei welcher die Oberflächenwelligkeit auf einen Mittenrauwert Ra von kleiner 0,004 mm reduziert wird und/oder modifiziert wird. Damit kann ebenfalls ein hoher Einebnungsgrad und damit verbunden eine sehr geringe Oberflächenwelligkeit erzielt werden.

Eine andere Vorgehensweise zeichnet sich dadurch aus, wenn beim ersten Bearbeitungsschritt die unmittelbar in Richtung der Längserstreckung hintereinander befindlichen Wellenberge in einem Abstandswert zueinander ausgebildet werden, der aus einem Abstands-Wertebereich stammt, dessen untere Grenze 1,0 mm, insbesondere 1,8 mm, und dessen obere Grenze 14 mm, insbesondere 10 mm, beträgt. Damit kann in Abhängigkeit von den relevanten Bearbeitungsparametern, wie beispielsweise der Drehzahl des Fräsrades, der Anzahl der über den Umfang des Fräsrades verteilt angeordneten Fräserschneiden sowie der Relativgeschwindigkeit zwischen dem Fräsrad und der Schiene, die Oberflächenwelligkeit in vorgegebenen Grenzen festgelegt und bestimmt werden.

Schließlich ist ein Vorgehen vorteilhaft, bei dem die Fortbewegungsgeschwindigkeit des Bearbeitungsfahrzeugs während des Reprofilierungsvorgangs mit einem Geschwindigkeitswert durchgeführt wird, der aus einem Geschwindigkeits-Wertebereich stammt, dessen untere Grenze 3 m/min, insbesondere 5 m/min, und dessen obere Grenze 40 m/min, insbesondere 30 m/min, beträgt. Durch die Wahl der Relativgeschwindigkeit zwischen der Schiene und der Bearbeitungseinheit kann so ein zusätzlicher Einfluss auf die nach dem zweiten Bearbeitungsschritt erzielte Ebenheit der Lauffläche genommen werden.

Zum besseren Verständnis der Erfindung wird diese anhand der nachfolgenden Figuren näher erläutert.

Es zeigen jeweils in stark vereinfachter, schematischer Darstellung:
- Fig. 1: einen Schienenstrang mit einem Soll-Profil der Schienen, im Querschnitt und vergrößerter Darstellung;
- Fig. 2: eine Draufsicht auf den Schienenstrang mit einem darauf befindlichen Bearbeitungsfahrzeug mit der Bearbeitungseinheit und dessen Bearbeitungsaggregate;
- Fig. 3: einen Schienenkopf der Schiene nach dem ersten Bearbeitungsschritt und einem die plastische Umformkraft aufbringenden Umformwerkzeug des zweiten Bearbeitungsaggregats, in Seitenansicht;
- Fig. 4: einen weiteren Schienenkopf der Schiene nach dem ersten Bearbeitungsschritt und einer Vielzahl die plastische Umformkraft aufbringenden Umformwerkzeuge, in Seitenansicht;
- Fig. 5: einen anderen Schienenkopf der Schiene nach dem ersten Bearbeitungsschritt und einer weiteren Möglichkeit zum Aufbringen der plastischen Umformkraft mittels eines Kugelstrahlverfahrens, in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

Einleitend sei erwähnt, dass das nachfolgend beschriebene Reprofilierungsverfahren einerseits mit einer ortsfest positionierten Bearbeitungsanlage oder andererseits auch mittels einer mobilen Bearbeitungsanlage durchgeführt werden kann. Nachfolgend ist jener Fall beschrieben, bei welchem eine mobile Bearbeitungsanlage vorgesehen ist, welche entlang der zumindest einen zu bearbeitenden Schiene bewegt wird.

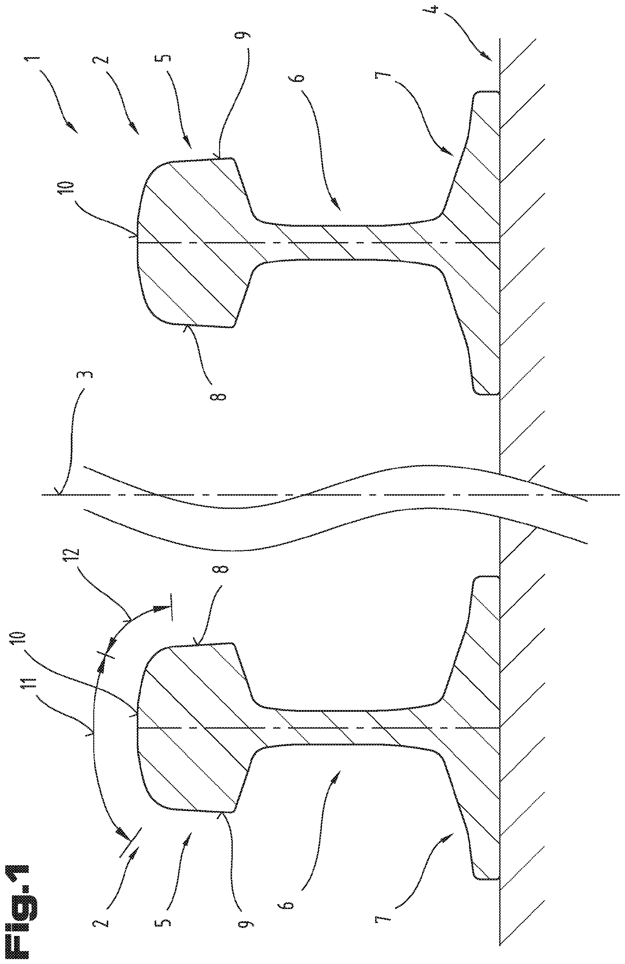

In den grundsätzlich zusammengehörigen Fig 1 bis 5 sind unterschiedliche Möglichkeiten und Anordnungen von Bearbeitungskomponenten, welche zur Reprofilierung von Schienen dienen, gezeigt und beschrieben.

Die Fig. 1 zeigt einen Querschnitt durch einen Schienenstrang 1 umfassend zumindest ein Paar von Schienen 2, welche Schienen 2 parallel zueinander im Abstand einer Spurweite voneinander distanziert angeordnet sind. Die Schienen 2 sind in regelmäßigen, bevorzugt kurzen Abständen zumeist auf quer zu einer Gleisachse 3 ausgelegten Schwellen 4 aus Beton, Stahl, Holt oder Kunststoff befestigt, wobei hier auf die Darstellung von Befestigungselementen verzichtet worden ist. Die Gleisachse 3 bildet eine Mittelachse aus, wobei in dieser auch eine eine vertikale Ausrichtung aufweisende Mittelebene verlaufen kann. Die Schienen 2 des Schienenstrangs 1 bilden als Gleis zusammen mit dem Kleineisen und der Bettung den Oberbau einer Bahnstrecke aus. Grundsätzlich bilden die hier gezeigten und beschriebenen Schienen 2 im Bahnwesen lineare Trag- und Führungselemente und somit den vorgegebenen Fahrweg für darauf befindliche Schienenfahrzeuge. Dabei sei erwähnt, dass der Querschnitt der Schienen 2 unterschiedlichst ausgebildet sein kann und dieser Querschnitt nur beispielhaft gewählt wurde.

Jede der Schienen 2 umfasst in ihrem Querschnitt gesehen einen Schienenkopf 5, einen Schienensteg 6 und einen Schienenfuß 7. Der Schienenkopf 5 ist dabei vom Schienensteg 6 getragen und der Schienenfuß 7 ist seinerseits an der Schwelle 4 oder einem sonstigen Auflager bzw. Untergrund befestigt.

Der Teil des Schienenkopfs 5, der von Rädern eines Schienenfahrzeuges berührt werden kann, wird in diesem Zusammenhang als Lauffläche 10 bezeichnet. Die nicht dargestellten Spurkränze der Schienenfahrzeuge sind jeweils an einander zugewendeten Seiten der Schienen 2 angeordnet, wobei dies auch jene Seiten sind, welche der Gleisachse 3 bzw. einer Gleismitte zugewendet sind. Der Schienenkopf 5 ist seitlich durch eine innere Seitenfläche 8 und eine dieser gegenüberliegend angeordnete äußere Seitenfläche 9 begrenzt. Der sich im Querschnitt gesehen zwischen den Seitenflächen 8 und 9 erstreckende Profilabschnitt kann im weitesten Sinn als Lauffläche 10 der Schiene 2 bezeichnet werden. Die Lauffläche 10 jeder Schiene 2 kann sich aus einer Fahrfläche 11 und einer Fahrkante 12 zusammensetzen. Die Fahrfläche 11 ist dabei an einer Oberseite des Schienenkopfs 5 verlaufend angeordnet, wobei die Fahrkante 12 den Übergang zur inneren Seitenfläche 8 bildet, welche der Gleismitte bzw. der Gleisachse 3 zugewendet ist.

An der Lauffläche 10 von verlegten Schienen 2 entstehen mit der Zeit Schäden, wie beispielsweise Korrosion, Verschleiß, Risse, Fahrflächenfehler wie Riffel, Wellen, Radschleuderstellen, Grübchenbildung, Querprofilveränderungen wie Abflachungen der bombierten Fahrfläche, Grate, Wülste oder dergleichen. Die Verschleißerscheinungen und/oder Schäden, die sich im Wesentlichen auf den äußersten Bereich der Lauffläche 10 beschränken, können durch Reprofilieren der Schiene 2 Großteils beseitigt werden. Zumeist wird durch ein spanabhebendes Bearbeitungsverfahren das verschlissene bzw. beschädigte Material des Schienenkopfs 5 an der Oberfläche der Schiene 2 entfernt und der bearbeitete Schienenkopf 5 soweit als möglich wieder an ein Sollprofil der Schiene 2 angenähert.

Das erfindungsgemäße Verfahren betrifft das Profilieren oder Reprofilieren der Lauffläche 10, insbesondere deren Fahrfläche 11 und/oder Fahrkante 12, wobei sich die Bearbeitung auch über die Fahrkante 12 hinaus über die innere Seitenfläche 8 erstrecken kann. Es wäre aber auch möglich, die Bearbeitung eventuell auch über die Fahrfläche 11 hinaus über die äußere Seitenfläche 9 durchzuführen.

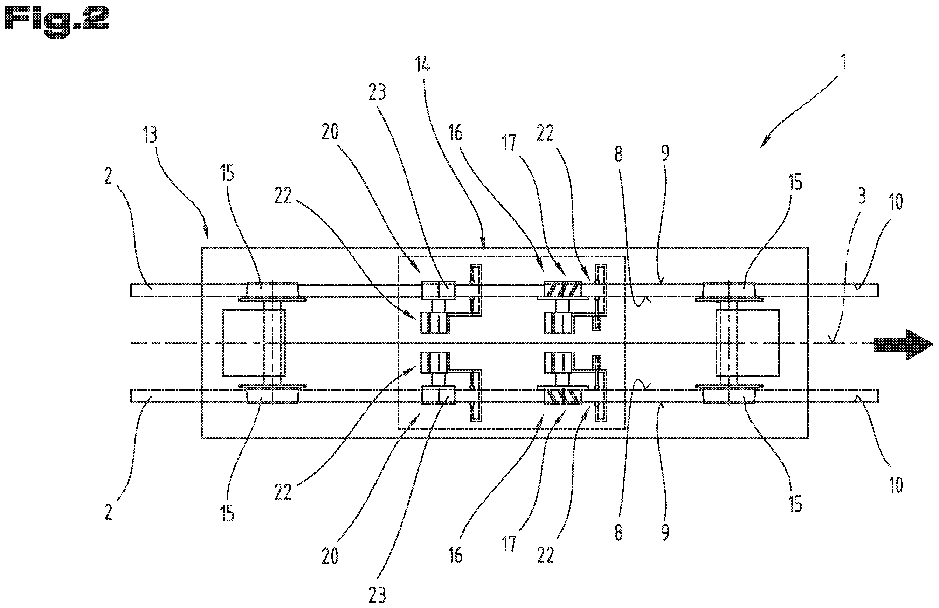

In der Fig. 2 ist der aus den Schienen 2 gebildete Schienenstrang 1 in Draufsicht und einem auf den Schienen 2 abgestützten und daran geführten Bearbeitungsfahrzeug 13 mit dessen Bearbeitungseinheit 14 stark stilisiert und vereinfacht dargestellt. Die mögliche Bearbeitungsrichtung und damit die Fortbewegungsrichtung des Bearbeitungsfahrzeugs 13 ist mit einem Pfeil angedeutet, wobei hier dies von links nach rechts erfolgt. Es wurden lediglich in Richtung der Schienenstrang-Längsachse voneinander beabstandete Radsätze 15 angedeutet, von welchen zumindest einer der Radsätze 15 mit einem Antriebsmittel in Antriebsverbindung stehen kann. Auf die Darstellung eines Grundrahmens des Bearbeitungsfahrzeugs 13 wurde der besseren Übersichtlichkeit halber verzichtet und nur die Umrisse des Bearbeitungsfahrzeugs 13 angedeutet.

Die Bearbeitungseinheit 14 umfasst zumindest ein erstes Bearbeitungsaggregat 16 mit zumindest einem rotierend angetriebenen, spanabhebenden Bearbeitungswerkzeug 17. Die Abstützung des ersten Bearbeitungsaggregats 16 kann z.B. mittels Gleitschuhen erfolgen, wobei zur Führung und relativen Ausrichtung bezüglich der Schiene 2 eigene Führungsmittel vorgesehen sein können. Es ist bevorzugt vorgesehen, dass beiden Schienen 2 jeweils ein eigenes erstes Bearbeitungsaggregat 16 zu deren Bearbeitung zugeordnet sein kann. Das zumindest eine Bearbeitungswerkzeug 17 ist im vorliegenden Ausführungsbeispiel als Fräsrad mit einer Vielzahl an umfänglich hintereinander angeordneten sowie entlang des zu reprofilierenden Schienenkopfprofils ausgerichteten Messerkopfschneiden ausgebildet. Die Messerkopfschneiden sind nicht näher bezeichnet und nur vereinfacht angedeutet. Die Messerkopfschneiden sind jeweils aus über den Umfang verteilt angeordneten Messerkopfsätzen zusammengefasst, wobei jeder Messerkopfsatz aus mehreren an das Profil des Schienenkopfs 5 in deren Orientierung und Ausrichtung angepasste Messerkopfschneiden gebildet ist. Durch die Rotationsbewegung des Fräsrades wird von jeweils in Umfangsrichtung hintereinander angeordneten Messerkopfschneiden eines jeden Messerkopfsatzes eine eigene Bearbeitungsspur gebildet. Auf die Darstellung bzw. näher Bezeichnung von diversen Antriebsmitteln für das erste Bearbeitungsaggregat 16 und dessen Bearbeitungswerkzeug 17 wurde der besseren Übersichtlichkeit halber verzichtet.

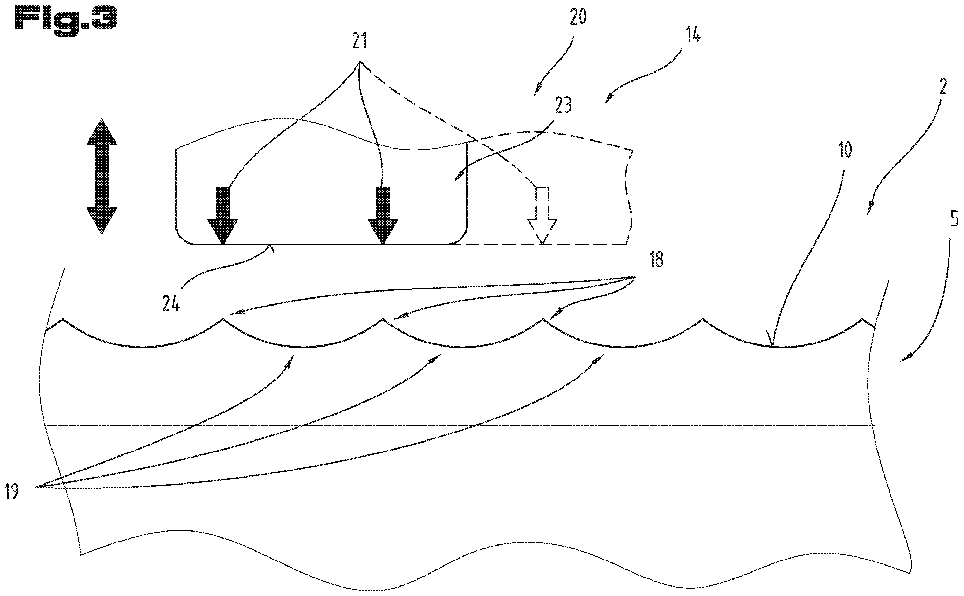

Die Fig. 3 zeigt eine Seitenansicht auf die Schiene 2, wobei hier jene im Zuge des Abtragvorgangs durch das Reprofilieren entstehende Oberflächenwelligkeit von nur einer von den zuvor beschriebenen Messerkopfschneiden ausgebildeten Spur stark übertrieben und unmaßstäblich dargestellt ist. Die Oberflächenwelligkeit kommt durch die Relativbewegung zwischen der zumindest einen Schiene 2 und der Bearbeitungseinheit 14 zustande. So kann beispielsweise die Fortbewegungsgeschwindigkeit des Bearbeitungsfahrzeugs 13 oder die Fortbewegungsgeschwindigkeit der Schiene 2 während des Reprofilierungsvorgangs mit einem Geschwindigkeitswert durchgeführt werden, der aus einem Geschwindigkeits-Wertebereich stammt, dessen untere Grenze 3 m/min, insbesondere 5 m/min, und dessen obere Grenze 40 m/min, insbesondere 30 m/min, beträgt.

Es erfolgt das Bearbeiten des Schienenkopfs 5 im Abschnitt von dessen Lauffläche 10 in einem ersten Bearbeitungsschritt mittels des zumindest einen spanabhebenden Bearbeitungswerkzeugs 17, wobei im ersten Bearbeitungsschritt der Werkstoffabtrag in einem Fräsvorgang durchgeführt wird. Bei diesem Werkstoffabtrag, der in Richtung der Längserstreckung der Schiene 2 durchgeführt wird, wird die zuvor beschriebene Oberflächenwelligkeit mit Wellenbergen 18 und Wellentälern 19 ausgebildet. Die Wellenberge 18 können auch als Erhöhungen und die Wellentäler 19 können auch als Vertiefungen bezeichnet werden.

Die Oberflächenwelligkeit, welche im Zuge des ersten Bearbeitungsschritts durch den Fräsvorgang entsteht, kann beispielsweise von unmittelbar in einer Spur bzw. Frässpur sowie in Richtung der Längserstreckung hintereinander befindlichen Wellenbergen 18 in einem Abstandswert zueinander ausgebildet werden, der aus einem Abstands-Wertebereich stammt, dessen untere Grenze 1,0 mm, insbesondere 1,8 mm, und dessen obere Grenze 14 mm, insbesondere 10 mm, beträgt. Der Abstandswert ist dabei von der Drehzahl des Fräsrades, der Anzahl an Messerkopfsätzen und der Relativgeschwindigkeit zwischen der Schiene 2 und dem spanabhebenden Bearbeitungswerkzeugs 17 abhängig. Je höher der Geschwindigkeitsunterschied und/oder je geringer die Drehzahl des Fräsrades ist, desto länger ist der Abstandswert.

Wie aus einer Zusammenschau der Fig. 2 und Fig. 3 zu ersehen ist, umfasst die Bearbeitungseinheit 14 auch noch zumindest ein zweites Bearbeitungsaggregat 20, welches dazu vorgesehen ist, die zuvor beschriebene Oberflächenwelligkeit zu reduzieren. Dies sollte allerdings ohne einen weiteren Werkstoffabtrag im Bereich des Schienenkopfs 5 erfolgen bzw. durchgeführt werden.

Die Reduzierung und die damit einhergehende Einebnung zumindest der Wellenberge 18 soll mittels plastischer Umformung erfolgen. Durch die plastische Umformung wird das Material bzw. der Werkstoff der Schiene 2 geringfügig verlagert, wodurch die Geradheit der Lauffläche 10 verbessert wird. Die geringfügige Verlagerung oder Umlagerung des Materials erfolgt hauptsächlich und in einem überwiegenden Ausmaß bzw. überwiegenden Anteil bei den Wellenbergen 18, wobei diese Verlagerung in einem überwiegenden Ausmaß in Richtung der Längserstreckung der Schiene 2 erfolgt. So werden die jeweiligen Wellenberge 18 bevorzug durch eine aufgebrachte Umformkraft 21 in die jeweils unmittelbar benachbart angeordneten oder unmittelbar daneben befindlichen Wellentäler 19 hinein verformt. Damit wird ein Angleichen an einen überwiegend geradlinig verlaufenden Längsverlauf der fertig reprofilierten Lauffläche 10 der Schiene 2 erzielt.

Zur Durchführung der plastischen Umformung ist das Aufbringen zumindest einer in Richtung auf die zu bearbeitende Lauffläche 10 gerichteten Umformkraft 21 erforderlich. Die Umformkraft 21 kann mit unterschiedlichsten Mitteln, wie z.B. einem zweiten oder weiteren Bearbeitungswerkzeug aufgebracht werden. Dabei soll die zumindest eine Umformkraft 21 in einer normalen Ausrichtung auf die zu bearbeitende Lauffläche 10 aufgebracht werden. Weiters kann es vorteilhaft sein, wenn die Umformkraft 21 pulsierend aufgebracht wird. Dies kann mittels elektrischer und/oder pneumatischer und/oder hydraulischer Antriebsmittel erfolgen, wie diese allgemein aus dem Stand der Technik bekannt sind.

Unter einer pulsierenden Aufbringung wird hier verstanden, dass eine nicht kontinuierlich übertragene Energie (Stoßenergie) über eine Werkstück-Oberfläche in das Material eingebracht wird. Die Umformung oder Kaltverformung des Schienenwerkstoffs erfolgt aufgrund der Energiedissipation beim Auftreffen der Stoßenergie auf die Werkstück-Oberfläche, welche als plastische Dissipationsenergie bezeichnet werden kann.

Die zumindest eine pulsierend aufgebrachte Umformkraft 21 kann auch mit einer schwellenden Intensität aufgebracht werden. Weiters kann auch die Frequenz der zumindest einen pulsierend aufgebrachten Umformkraft 21 gleichmäßig oder mit einer sich ändernden Frequenz aufgebracht werden. Damit kann die Schwingungszahl pro Sekunde an die jeweiligen Einsatzbedingungen oder Anforderungen angepasst werden.

Wie eingangs erwähnt, kann die Bearbeitungseinheit 14 mit den Bearbeitungsaggregaten 16, 20 ortsfest positioniert angeordnet sein und die zu bearbeitende Schiene 2 wird während der Bearbeitungsschritte relativ bezüglich der Bearbeitungseinheit 14 in Richtung ihrer Längserstreckung durch die Bearbeitungseinheit 14 hindurchbewegt.

Bevorzugt wird jedoch die Nachbearbeitung und Reprofilierung an dem im Gleisbett verlegten Schienenstrang 1 durchgeführt. In diesem Fall ist die Bearbeitungseinheit 14 am Bearbeitungsfahrzeug 13 angeordnet oder daran gehalten. Das Bearbeitungsfahrzeug 13 wird entlang des verlegten und von Schienen 2 gebildeten Schienenstrangs 1 verfahren, wobei die Bearbeitung der zu bearbeitenden Lauffläche 10 während der Verfahrbewegung des Bearbeitungsfahrzeugs 13 durchgeführt wird.

Um eine Ausrichtung zwischen der zu bearbeitenden Schiene 2 und zumindest einem der Bearbeitungsaggregate 16, 20 zu erzielen, kann wie allgemein bekannt, zumindest ein Führungsmittel 22 zur Führung zumindest eines der Bearbeitungsaggregate 16, 20 der Höhe und/oder der Seite nach relativ bezüglich des zu bearbeitenden Schienenkopfs 5 vorgesehen sein. Bevorzug kann jedem der Bearbeitungsaggregate 16, 20 ein eigenes Führungsmittel 22 zugeordnet und mit diesem gekoppelt sein.

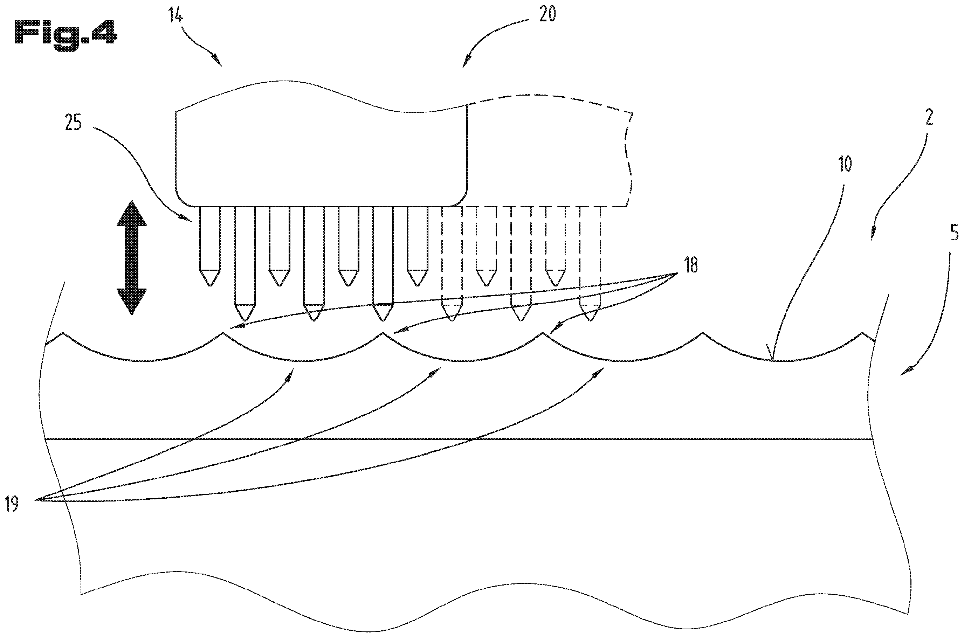

Wie nun aus der Fig. 3 weiters zu ersehen ist, kann das zweite Bearbeitungsaggregat 20 zumindest ein Umformwerkzeug 23 umfassen. Das zumindest eine Umformwerkzeug 23 ist in einer von der zu bearbeitenden Schienenoberfläche (Lauffläche 10) abgehobenen Stellung dargestellt. Das zumindest eine Umformwerkzeug 23 umfasst eine der Lauffläche 10 des zu bearbeitenden Schienenkopfs 5 zugewendete Arbeitsfläche 24. Die Arbeitsfläche 24 ist ihrerseits ebenflächig ausgebildet und weist eine Längserstreckung auf, welche sich zumindest über zwei, bevorzugt jedoch über zumindest drei, in Richtung der Längserstreckung unmittelbar hintereinander befindliche Wellenberge 18 erstreckt. Dies ist jeweils in der Fig. 3 und der nachfolgenden Fig. 4 angedeutet. Die Längserstreckung der Arbeitsfläche 24 kann sich auch über eine größere Anzahl an unmittelbar hintereinander befindlichen Wellenbergen 18 erstrecken.

Damit deckt die Arbeitsfläche 24 zumindest ein Wellental 19, bevorzugt jedoch zumindest zwei Wellentäler 19, in Richtung der Längserstreckung der Schiene 2 ab. So wird erreicht, dass die Arbeitsfläche 24 auch während des zweiten Bearbeitungsschritts stets an zumindest zwei der Wellenberge 18 zur umformenden Anlage kommt. Es sei erwähnt, dass z.B. jeder der zuvor beschriebenen Spuren der einzelnen Messerkopfschneiden ein eigenes Umformwerkzeug 23 zugeordnet sein kann. Dann sind mehrere Umformwerkzeuge 23 vorgesehen, wobei die Umformwerkzeuge 23 zueinander versetzt über den zu bearbeitenden Profilquerschnitt verteilt angeordnet sind.

Bei diesem etwas größer und volumiger ausgebildeten zumindest einen Umformwerkzeug 23 kann die zumindest eine pulsierend aufgebrachte Umformkraft 21 aus einem Kraft-Wertebereich stammen, dessen untere Grenze 20 kN, insbesondere 40 kN, und dessen obere Grenze 80 kN, insbesondere 60 kN, beträgt.

Weiters kann die zumindest eine pulsierend aufgebrachte Umformkraft 21 mit einer Frequenz aufgebracht werden, welche aus einem Frequenz-Wertebereich stammt, dessen untere Grenze 100 Hertz (Hz), insbesondere 150 Hertz (Hz), und dessen obere Grenze 350 Hertz (Hz), insbesondere 300 Hertz (Hz), beträgt.

In der Fig. 4 ist eine weitere Anordnungsmöglichkeit und Ausbildung des zweiten Bearbeitungsaggregats 20 an einer zu bearbeitenden Schiene 2 in einer Seitenansicht auf die Schiene 2 dargestellt. Es ist hier wiederum jene im Zuge des Abtragvorgangs durch das Reprofilieren entstehende Oberflächenwelligkeit von nur einer von den zuvor beschriebenen Messerkopfschneiden ausgebildeten Spur stark übertrieben und unmaßstäblich dargestellt.

Das zweite Bearbeitungsaggregat 20 umfasst bei diesem Ausführungsbeispiel eine Vielzahl von Umformwerkzeugen 25. Jedes der Umformwerkzeuge 25 ist stiftförmig oder nadelförmig ausgebildet und kann jeweils mit einem kalottenförmig ausgebildeten Hammerkopf versehen sein. Ein maximaler Umformweg der Vielzahl von Umformwerkzeugen 25 soll so bemessen sein, dass dieser zumindest noch vor dem Erreichen des Wellentals 19 endet. Der maximale Umformweg kann aber auch so bemessen sein, dass dieser am Wellental 19 endet. Unabhängig davon wäre es aber auch noch möglich, dass sich der Umformweg über das Wellental hinaus in Richtung auf den Schienenfuß 7 in das Material des Schienenkopfes 5 hinein erstreckt. Weiters ist noch dargestellt, dass die einzelnen Umformwerkzeuge 25 nicht alle gleichzeitig hin in Richtung auf die umzuformende Lauffläche 10 verstellt werden, sondern die Umformbewegung pulsierend und abwechselnd mittels der stiftförmig oder nadelförmig ausgebildeten Vielzahl von Umformwerkzeugen 25 erfolgen kann. Deshalb sind die Bearbeitungsenden der Umformwerkzeuge 25 in einem zueinander unterschiedlichen Abstand von der Lauffläche 10 dargestellt.

Bei diesem Beispiel zur Aufbringung der pulsierenden Umformkraft 21 kann diese aus einem Kraft-Wertebereich stammen, dessen untere Grenze 150 N, insbesondere 650 N, und dessen obere Grenze 1,5 kN, insbesondere 1,0 kN, beträgt.

Dabei kann die zumindest eine pulsierend aufgebrachte Umformkraft 21 mit einer Frequenz aufgebracht werden, welche aus einem Frequenz-Wertebereich stammt, dessen untere Grenze 500 Hertz (Hz), insbesondere 1 Kilohertz (kHz), und dessen obere Grenze 3 Kilohertz (kHz), insbesondere 2 Kilohertz (kHz), beträgt.

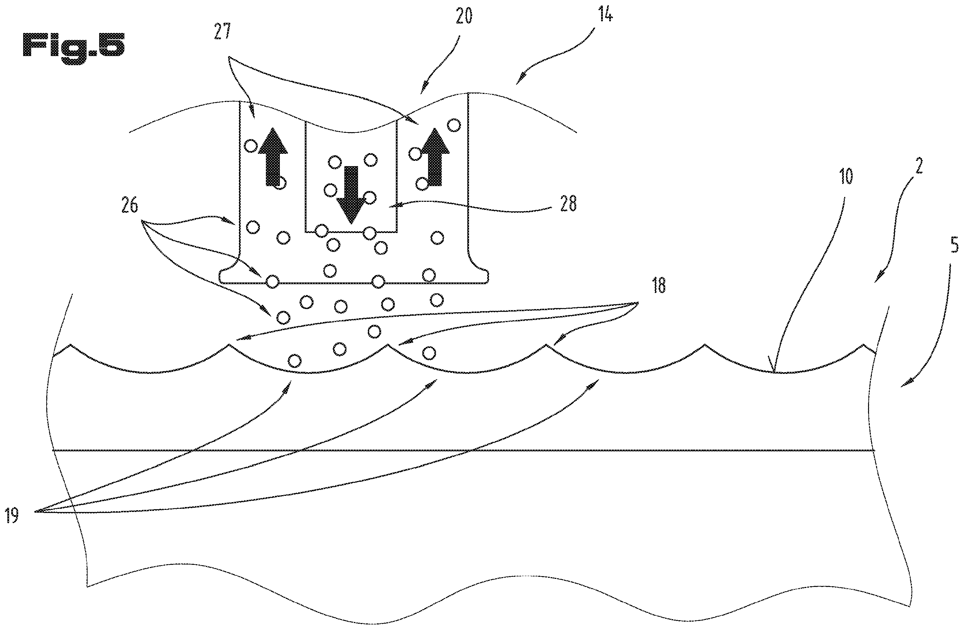

In der Fig. 5 ist noch angedeutet, dass die vom zweiten Bearbeitungsaggregat 20 aufgebrachte Umformkraft 21 mittels eines Kugelstrahlverfahrens aufgebracht werden kann. Beim Kugelstrahlverfahren werden die Vielzahl an einzelnen Kugeln 26 mit einer vorbestimmten Geschwindigkeit auf die zu bearbeitende Lauffläche 10 geschleudert bzw. bewegt und damit die Umformkraft 21 aufgebaut. Bei diesem Bearbeitungsschritt mit den Kugeln 26 sollen diese nach dem Umformvorgang mittels einer Sammeleinheit 27, insbesondere einer Saugvornchtung, wieder aufgesammelt werden. Damit können die aufgesammelten Kugeln 26 einer neuerlichen Verwendung zugeführt werden. Die Zuführung der einzelnen Kugeln 26 ist schematisch angedeutet, wobei diese in einem zentralen Zufuhrkanal 28, der in Richtung auf die zu bearbeitende Lauffläche 10 gerichtet ist, mit einer vorbestimmten Geschwindigkeit bewegt werden. Nach dem Auftreffen auf der Lauffläche 10 und der damit verbundenen mechanischen Kaltumformung werden die Kugeln 26 von der hier außenliegend um den Zufuhrkanal 28 herum angeordneten Sammeleinheit 27 mittels eines Saugvorgangs aufgesammelt. Diese Darstellung ist schematisch vereinfacht gewählt, wobei hier auch eine schräge oder winkelige Ausrichtung des Kugelstrahls auf die Lauffläche 10 möglich ist.

Bei dem zuvor beschriebenen Kugelstrahlverfahren handelt es sich um speziell ausgebildete Strahlkörper, welche eine Kugelform aufweisen. Es sei an dieser Stelle noch angeführt, dass die vom zweiten Bearbeitungsaggregat 20 aufgebrachte Umformkraft 21 nicht nur durch Kugeln 26 sondern durch beliebig anders ausgebildete, sogenannte Strahlkörper 29, auch mit pulsierender Energieübertragung aufgebracht werden kann. Die Raumform der einzelnen Strahlkörper 29 kann auch von der Kugelform abweichen und beliebig gewählt werden. Es könnte z.B. auch ein Sandstrahlverfahren zur Einbringung und der damit verbundenen plastischen Umformung eingesetzt werden. Als Werkstoffe für die Strahlkörper 29 können z.B. metallisch, mineralisch oder keramisch Materialien ausgewählt werden.

Bei diesem beschriebenen Beispiel zur Aufbringung der pulsierenden Umformkraft 21 kann diese aus einem Kraft-Wertebereich stammen, dessen untere Grenze 20 N, insbesondere 30 N, und dessen obere Grenze 50 N, insbesondere 40 N, beträgt.

Dabei kann die zumindest eine pulsierend aufgebrachte Umformkraft 21 mit einer Frequenz aufgebracht werden, welche aus einem Frequenz-Wertebereich stammt, dessen untere Grenze 5 Kilohertz (kHz), insbesondere 10 Kilohertz (kHz), und dessen obere Grenze 25 Kilohertz (kHz), insbesondere 20 Kilohertz (kHz), beträgt.

Bei all den zuvor beschriebenen und mit unterschiedlichen Mitteln durchgeführten zweiten Bearbeitungsschritten soll die Amplitude der Oberflächenwelligkeit in normaler Richtung auf die Längserstreckung der bearbeiteten Lauffläche 10 auf einen Amplituden-Wert verringert werden, der aus einem Amplituden-Wertbereich stammt, dessen untere Grenze 0,001 mm, insbesondere 0,004 mm, und dessen obere Grenze 0,01 mm, insbesondere 0,008 mm, beträgt.

Aufgrund der plastischen Umformung kann auch die Oberflächenwelligkeit auf einen Mittenrauwert Ra von kleiner 0,004 mm reduziert und/oder modifiziert werden. Es kann damit aber auch eine Oberflächenhärtung zumindest der behandelten Abschnitte der Lauffläche 10 erzielt werden.

Weiters soll der plastische Umformvorgang unterhalb der Rekristallisationstemperatur des jeweiligen Schienenwerkstoffs der Schiene 2 durchgeführt werden. Damit können thermische Belastungen und ungewollte Gefüge Änderungen zumindest im Oberflächenbereich verhindert werden.

Bei all den zuvor beschriebenen Reprofilierungs-Vorgängen erfolgt zuerst ein mechanischer Materialabtrag zumindest im Bereich des Schienenkopfes 5 mittels zumindest eines spanabhebenden Bearbeitungswerkzeugs 17, insbesondere eines Radfräsers. Nachfolgend und anschließend daran erfolgt die weitere mechanische Umformung des Materials des zuvor bearbeiteten Schienenkopfes 5. Es erfolgt im zweiten oder nachfolgenden Arbeitsschritt kein weiterer Materialabtrag, sondern nur eine mechanische Umformung und die damit verbundene Glättung der Oberflächenwelligkeit.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Schienenstrang
- 2: Schiene
- 3: Gleisachse
- 4: Schwelle
- 5: Schienenkopf
- 6: Schienensteg
- 7: Schienenfuß
- 8: innere Seitenfläche
- 9: äußere Seitenfläche
- 10: Lauffläche
- 11: Fahrfläche
- 12: Fahrkante
- 13: Bearbeitungsfahrzeug
- 14: Bearbeitungseinheit
- 15: Radsatz
- 16: erstes Bearbeitungsaggregat
- 17: Bearbeitungswerkzeug
- 18: Wellenberg
- 19: Wellental
- 20: zweites Bearbeitungsaggregat
- 21: Umformkraft
- 22: Führungsmittel
- 23: Umformwerkzeug
- 24: Arbeitsfläche
- 25: Umformwerkzeug
- 26: Kugel
- 27: Sammeleinheit
- 28: Zufuhrkanal
- 29: Strahlkörper

## Patentansprüche

1. Verfahren zum Reprofilieren zumindest einer Schiene (2) eines verlegten und von den Schienen (2) gebildeten Schienenstrangs (1) zumindest im Abschnitt ihrer am Schienenkopf (5) befindlichen Lauffläche (10) umfassend folgende Schritte:
- Bereitstellen eines Bearbeitungsfahrzeugs (13), wobei das Bearbeitungsfahrzeug (13) entlang des Schienenstrangs (1) verfahrbar ist,
- Bereitstellen einer Bearbeitungseinheit (14), wobei die Bearbeitungseinheit (14) am Bearbeitungsfahrzeug (13) angeordnet ist und die Bearbeitung der zu bearbeitenden Lauffläche (10) während des Verfahrens des Bearbeitungsfahrzeugs (13) durchgeführt wird, die Bearbeitungseinheit (14) umfasst
- zumindest ein erstes Bearbeitungsaggregat (16) mit zumindest einem rotierend angetriebenen, spanabhebenden Bearbeitungswerkzeug (17), wobei das zumindest eine Bearbeitungswerkzeug (17) als Fräsrad mit einer Vielzahl an umfänglich hintereinander angeordneten sowie entlang des zu reprofilierenden Schienenkopfprofils ausgerichteten Messerkopfschneiden ausgebildet ist,
- zumindest ein zweites Bearbeitungsaggregat (20),
- Bearbeiten des Schienenkopfs (5) im Abschnitt von dessen Lauffläche (10) in einem ersten Bearbeitungsschritt mittels des zumindest einen spanabhebenden Bearbeitungswerkzeugs (17), wobei im ersten Bearbeitungsschritt der Werkstoffabtrag in einem Fräsvorgang durchgeführt wird, und bei diesem Werkstoffabtrag in Richtung der Längserstreckung der Schiene (2) eine Oberflächenwelligkeit mit Wellenbergen (18) und Wellentälern (19) ausgebildet wird, und in einem nachfolgenden zweiten Bearbeitungsschritt mittels des zweiten Bearbeitungsaggregats die Oberflächenwelligkeit reduziert und/oder modifiziert wird,
- wobei bei der Reduzierung der Oberflächenwelligkeit im zweiten Bearbeitungsschritt zumindest die Wellenberge (18) plastisch umgeformt und eingeebnet werden, und
- wobei die plastische Umformung zumindest der Wellenberge (18) mittels zumindest einer in Richtung auf die zu bearbeitende Lauffläche (10) gerichtete Umformkraft (21) durchgeführt wird,
**dadurch gekennzeichnet,**
- **dass** die zumindest eine Umformkraft (21) pulsierend aufgebracht wird und dabei das Material der Schiene (2) geringfügig verlagert wird und dass im zweiten Bearbeitungsschritt keine ständige Auflage eines Bearbeitungswerkzeugs des zweiten Bearbeitungsaggregats (20) an der zu bearbeitenden Lauffläche (10) erfolgt.

2. Verfahren nach Anspruch 1, **dadurch gekennzeichnet, dass** zumindest ein Führungsmittel (22) zur Führung zumindest eines der Bearbeitungsaggregate (16, 20) der Höhe und/oder der Seite nach relativ bezüglich des zu bearbeitenden Schienenkopfs (5) vorgesehen ist.

3. Verfahren nach Anspruch 1 oder 2, **dadurch gekennzeichnet, dass** die zumindest eine Umformkraft (21) in einer normalen Ausrichtung auf die zu bearbeitende Lauffläche (10) aufgebracht wird.

4. Verfahren nach einem der vorhergehenden Ansprüche, **dadurch gekennzeichnet, dass** die zumindest eine pulsierend aufgebrachte Umformkraft (21) aus einem Kraft-Wertebereich stammt, dessen untere Grenze 20 N, insbesondere 150 N, und dessen obere Grenze 80 kN, insbesondere 1,5 kN, beträgt.

5. Verfahren nach einem der vorhergehenden Ansprüche, **dadurch gekennzeichnet, dass** die zumindest eine pulsierend aufgebrachte Umformkraft (21) mit einer schwellenden Intensität aufgebracht wird.

6. Verfahren nach einem der vorhergehenden Ansprüche, **dadurch gekennzeichnet, dass** die zumindest eine pulsierend aufgebrachte Umformkraft (21) mit einer Frequenz aufgebracht wird, welche aus einem Frequenz-Wertebereich stammt, dessen untere Grenze 100 Hertz (Hz), insbesondere 500 Hertz (Hz), und dessen obere Grenze 25 Kilohertz (kHz), insbesondere 3 Kilohertz (kHz), beträgt.

7. Verfahren nach Anspruch 6, **dadurch gekennzeichnet, dass** die zumindest eine pulsierend aufgebrachte Umformkraft (21) mit einer gleichmäßigen Frequenz oder mit einer sich ändernden Frequenz aufgebracht wird.

8. Verfahren nach einem der vorhergehenden Ansprüche, **dadurch gekennzeichnet, dass** das zweite Bearbeitungsaggregat (20) zumindest ein Umformwerkzeug (23) umfasst.

9. Verfahren nach Anspruch 8, **dadurch gekennzeichnet, dass** das zumindest eine Umformwerkzeug (23) eine der Lauffläche (10) des zu bearbeitenden Schienenkopfs (5) zugewendete Arbeitsfläche (24) aufweist, welche Arbeitsfläche (24) mit einer Längserstreckung ausgebildet ist, welche sich über zumindest zwei, bevorzugt über zumindest drei, in Richtung der Längserstreckung unmittelbar hintereinander befindliche Wellenberge (18) erstreckt.

10. Verfahren nach Anspruch 8 oder 9, **dadurch gekennzeichnet, dass** mehrere Umformwerkzeuge (23) vorgesehen sind und die Umformwerkzeuge (23) zueinander versetzt über den zu bearbeitenden Profilquerschnitt verteilt angeordnet sind.

11. Verfahren nach einem der Ansprüche 1 bis 7, **dadurch gekennzeichnet, dass** eine Vielzahl von Umformwerkzeugen (25) vorgesehen ist und jedes der Umformwerkzeuge (25) mit einem kalottenförmig ausgebildeten Hammerkopf versehen ist.

12. Verfahren nach Anspruch 11, **dadurch gekennzeichnet, dass** ein maximaler Umformweg der Vielzahl von Umformwerkzeugen (25) zumindest noch vor dem Erreichen des Wellentals (19) endet.

13. Verfahren nach Anspruch 11, **dadurch gekennzeichnet, dass** ein maximaler Umformweg der Vielzahl von Umformwerkzeugen (25) am Wellental (19) endet.

14. Verfahren nach Anspruch 11, **dadurch gekennzeichnet, dass** sich ein maximaler Umformweg der Vielzahl von Umformwerkzeugen (25) über das Wellental (19) hinaus in Richtung auf einen Schienenfuß (7) in das Material des Schienenkopfes (5) der Schiene (1) hinein erstreckt.

15. Verfahren nach einem der Ansprüche 1 bis 7, **dadurch gekennzeichnet, dass** die pulsierende Umformkraft (21) mittels eines Strahlverfahrens und einer Vielzahl an Strahlkörpern (29) auf die zu bearbeitende Lauffläche (10) aufgebracht wird.

16. Verfahren nach Anspruch 15, **dadurch gekennzeichnet, dass** die Strahlkörper (29) nach dem Umformvorgang mittels einer Sammeleinheit (27), insbesondere einer Saugvorrichtung, aufgesammelt werden.

17. Verfahren nach einem der vorhergehenden Ansprüche, **dadurch gekennzeichnet, dass** die Amplitude der Oberflächenwelligkeit in normaler Richtung auf die Längserstreckung der bearbeiteten Lauffläche (10) auf einen Amplituden-Wert verringert wird, der aus einem Amplituden-Wertbereich stammt, dessen untere Grenze 0,001 mm, insbesondere 0,004 mm, und dessen obere Grenze 0,01 mm, insbesondere 0,008 mm, beträgt.

18. Verfahren nach einem der vorhergehenden Ansprüche, **dadurch gekennzeichnet, dass** die Oberflächenwelligkeit auf einen Mittenrauwert Ra von kleiner 0,004 mm reduziert wird und/oder modifiziert wird.

19. Verfahren nach einem der vorhergehenden Ansprüche, **dadurch gekennzeichnet, dass** beim ersten Bearbeitungsschritt die unmittelbar in Richtung der Längserstreckung hintereinander befindlichen Wellenberge (18) in einem Abstandswert zueinander ausgebildet werden, der aus einem Abstands-Wertebereich stammt, dessen untere Grenze 1,0 mm, insbesondere 1,8 mm, und dessen obere Grenze 14 mm, insbesondere 10 mm, beträgt.

20. Verfahren nach einem der vorhergehenden Ansprüche, **dadurch gekennzeichnet, dass** die Fortbewegungsgeschwindigkeit des Bearbeitungsfahrzeugs (13) während des Reprofilierungsvorgangs mit einem Geschwindigkeitswert durchgeführt wird, der aus einem Geschwindigkeits-Wertebereich stammt, dessen untere Grenze 3 m/min, insbesondere 5 m/min, und dessen obere Grenze 40 m/min, insbesondere 30 m/min, beträgt.

## Claims

1. A method for reprofiling at least one rail (2) of a laid rail track (1) formed by the rails (2), at least in the section of its running surface (10) located at the rail head (5), comprising the following steps:
- providing a machining vehicle (13), wherein the machining vehicle (13) is movable along the rail track (1),
- providing a machining unit (14), wherein the machining unit (14) is arranged on the machining vehicle (13) and the machining of the running surface (10) to be machined is carried out during the travel of the machining vehicle (13), the machining unit (14) comprising
- at least a first machining aggregate (16) with at least one rotationally driven chip-removing machining tool (17), wherein the at least one machining tool (17) is formed as a milling wheel with a plurality of cutter head cutting edges arranged circumferentially one behind the other and aligned along the rail head profile to be reprofiled,
- at least one second machining aggregate (20),
- machining the rail head (5) in the section of its running surface (10) in a first machining step by means of the at least one chip-removing machining tool (17), wherein in the first machining step the material removal is carried out in a milling process, and a surface corrugation with corrugation crests (18) and corrugation troughs (19) is formed during this material removal in the direction of the longitudinal extension of the rail (2), and the surface corrugation is reduced and/or modified in a subsequent second machining step by means of the second machining aggregate,
- wherein during the reduction of the surface corrugation in the second machining step, at least the corrugation crests (18) are plastically deformed and leveled, and
- wherein the plastic deformation of at least the corrugation crests (18) is performed by means of at least one forming force (21) directed towards the running surface (10) to be machined,
**characterized in that**
- the at least one forming force (21) is applied in a pulsating manner and the material of the rail (2) is displaced slightly in the process and that in the second machining step, no continuous support of a machining tool of the second machining aggregate (20) on the running surface (10) to be machined is performed.

2. The method according to claim 1, **characterized in that** at least one guide means (22) for guiding at least one of the machining aggregates (16, 20) vertically and/or laterally relative to the rail head (5) to be machined is provided.

3. The method according to claim 1 or 2, **characterized in that** the at least one forming force (21) is applied in a normal orientation towards the running surface (10) to be machined.

4. The method according to one of the preceding claims, **characterized in that** the at least one forming force (21) applied in a pulsating manner originates from a force value range the lower limit of which is 20 N, in particular 150 N, and the upper limit of which is 80 kN, in particular 1.5 kN.

5. The method according to one of the preceding claims, **characterized in that** the at least one forming force (21) applied in a pulsating manner is applied with a swelling intensity.

6. The method according to one of the preceding claims, **characterized in that** the at least one forming force (21) applied in a pulsating manner is applied at a frequency which originates from a frequency value range the lower limit of which is 100 Hertz (Hz), in particular 500 Hertz (Hz), and the upper limit of which is 25 kilohertz (kHz), in particular 3 kilohertz (kHz).

7. The method according to claim 6, **characterized in that** the at least one forming force (21) applied in a pulsating manner is applied with a uniform frequency or with a changing frequency.

8. The method according to one of the preceding claims, **characterized in that** the second machining aggregate (20) comprises at least one forming tool (23).

9. The method according to claim 8, **characterized in that** the at least one forming tool (23) has a working surface (24) facing the running surface (10) of the rail head (5) to be machined, the working surface (24) being formed with a longitudinal extension which extends over at least two, preferably over at least three corrugation crests (18) located directly behind one another in the direction of the longitudinal extension.

10. The method according to claim 8 or 9, **characterized in that** a plurality of forming tools (23) is provided and the forming tools (23) are arranged offset from one another over the profile cross section to be machined.

11. The method according to one of claims 1 to 7, **characterized in that** a plurality of forming tools (25) is provided and each of the forming tools (25) is provided with a dome-shaped hammer head.

12. The method according to claim 11, **characterized in that** a maximum forming path of the plurality of forming tools (25) ends at least before reaching the corrugation trough (19).

13. The method according to claim 11, **characterized in that** a maximum forming path of the plurality of forming tools (25) ends at the corrugation trough (19).

14. The method according to claim 11, **characterized in that** a maximum forming path of the plurality of forming tools (25) extends beyond the corrugation trough (19) in the direction of a rail foot (7) into the material of the rail head (5) of the rail (1).

15. The method according to one of claims 1 to 7, **characterized in that** the pulsating forming force (21) is applied towards the running surface (10) to be machined by means of a blasting process and a plurality of blasting bodies (29).

16. The method according to claim 15, **characterized in that** the blasting bodies (29) are collected after the forming process by means of a collecting unit (27), in particular a suction device.

17. The method according to one of the preceding claims, **characterized in that** the amplitude of the surface corrugation in the normal direction with respect to the longitudinal extension of the running surface (10) to be machined is reduced to an amplitude value originating from an amplitude value range the lower limit of which is 0.001 mm, in particular 0.004 mm, and the upper limit of which is 0.01 mm, in particular 0.008 mm.

18. The method according to one of the preceding claims, **characterized in that** the surface corrugation is reduced and/or is modified to a center-line roughness Ra of less than 0.004 mm.

19. The method according to one of the preceding claims, **characterized in that** in the first machining step, the corrugation crests (18), which are located directly behind one another in the direction of the longitudinal extension, are formed at a distance value from one another which originates from a distance value range the lower limit of which is 1.0 mm, in particular 1.8 mm, and the upper limit of which is 14 mm, in particular 10 mm.

20. The method according to one of the preceding claims, **characterized in that** the travel speed of the machining vehicle (13) during the reprofiling process is carried out with a speed value which originates from a speed value range the lower limit of which is 3 m/min, in particular 5 m/min, and the upper limit of which is 40 m/min, in particular 30 m/min.

## Revendications

1. Procédé de reprofilage d'au moins un rail (2) d'une voie ferroviaire (1) posée et constituée des rails (2), au moins dans la section de sa surface de roulement (10) se trouvant au niveau du champignon du rail (5), comprenant les étapes suivantes :
- mise à disposition d'un véhicule d'usinage (13), dans lequel le véhicule d'usinage (13) est mobile le long de la voie ferroviaire (1),
- mise à disposition d'une unité d'usinage (14), dans lequel l'unité d'usinage (14) est disposée sur le véhicule d'usinage (13) et l'usinage de la surface de roulement (10) à usiner est effectué pendant le déplacement du véhicule d'usinage (13), l'unité d'usinage (14) comprenant
- au moins un premier groupe d'usinage (16) avec au moins un outil d'usinage (17) entraîné en rotation et à enlèvement de copeaux, dans lequel l' au moins un outil d'usinage (17) est conçu comme une roue de fraisage avec une pluralité de têtes porte-lames disposées les unes derrière les autres sur la circonférence et orientées le long du profil de champignon du rail à reprofiler,
- au moins un deuxième groupe d'usinage (20),
- usinage du champignon du rail (5) dans la section de sa surface de roulement (10) dans une première étape d'usinage au moyen de l'au moins un outil d'usinage (17) à enlèvement de copeaux, dans lequel, dans la première étape d'usinage, l'enlèvement de matière est effectué dans un processus de fraisage et, lors de cet enlèvement de matière, dans la direction de l'extension longitudinale du rail (2), une ondulation de surface avec des crêtes (18) et des creux (19) est formée et, dans une deuxième étape d'usinage suivante, l'ondulation de surface est réduite et/ou modifiée au moyen du deuxième groupe d'usinage,
- dans lequel, lors de la réduction de l'ondulation de surface, dans la deuxième étape d'usinage, au moins les crêtes (18) sont déformées plastiquement et aplanies et
- dans lequel le façonnage plastique au moins des crêtes (18) est effectuée au moyen d'au moins une force de façonnage (21) dirigée vers la surface de roulement (10) à usiner, **caractérisé en ce que**
- l'au moins une force de façonnage (21) est appliquée de manière pulsante et le matériau du rail (2) est alors légèrement déplacé et, dans la deuxième étape d'usinage, aucun appui constant d'un outil d'usinage du deuxième groupe d'usinage (20) n'a lieu contre la surface de roulement (10) à usiner.

2. Procédé selon la revendication 1, **caractérisé en ce qu'**au moins un moyen de guidage (22) est prévu pour le guidage d'au moins un des groupes d'usinage (16, 20) en la hauteur et/ou selon le côté par rapport au champignon de rail (5) à usiner.

3. Procédé selon la revendication 1 ou 2, **caractérisé en ce que** l'au moins une force de façonnage (21) est appliquée dans une orientation perpendiculaire par rapport à la surface de roulement (10) à usiner.

4. Procédé selon l'une des revendications précédentes, **caractérisé en ce que** l'au moins une force de façonnage (21) appliquée de manière pulsante se trouve dans une plage de valeurs de force dont la limite inférieure est de 20 N, plus particulièrement de 150 N, et dont la limite supérieure est de 80 kN, plus particulièrement de 1,5 kN.

5. Procédé selon l'une des revendications précédentes, **caractérisé en ce que** l'au moins une force de façonnage (21) appliquée de manière pulsante est appliquée avec une intensité croissante.

6. Procédé selon l'une des revendications précédentes, **caractérisé en ce que** l'au moins une force de façonnage (21) appliquée de manière pulsante est appliquée avec une fréquence qui se trouve dans une plage de valeurs de fréquences dont la limite inférieure est de 100 hertz (Hz), plus particulièrement de 500 hertz (Hz), et dont la limite supérieure est de 25 kilohertz (kHz), plus particulièrement de 3 kilohertz (kHz).

7. Procédé selon la revendication 6, **caractérisé en ce que** l'au moins une force de façonnage (21) appliquée de manière pulsante est appliquée avec une fréquence constante ou avec une fréquence variable.

8. Procédé selon l'une des revendications précédentes, **caractérisé en ce que** le deuxième groupe d'usinage (20) comprend au moins un outil de façonnage (23).

9. Procédé selon la revendication 8, **caractérisé en ce que** l'au moins un outil de façonnage (23) présente une surface de travail (24) orientée vers la surface de roulement (10) du champignon de rail (5) à usiner, cette surface de travail (24) étant réalisée avec une extension longitudinale, qui s'étend sur au moins deux, de préférence sur au moins trois creux (18) se trouvant immédiatement les uns derrière les autres dans la direction de l'extension longitudinale.

10. Procédé selon la revendication 8 ou 9, **caractérisé en ce que** plusieurs outils de façonnage (23) sont prévus et les outils de façonnage (23) sont disposés de manière décalée entre eux et sont répartis sur la section transversale profilée à usiner.

11. Procédé selon l'une des revendications 1 à 7, **caractérisé en ce qu'**une pluralité d'outils de façonnage (25) sont prévus et chacun des outils de façonnage (25) est muni d'une tête de marteau présente la forme d'une calotte.

12. Procédé selon la revendication 11, **caractérisé en ce qu'**une course de façonnage maximale de la pluralité d'outils de façonnage (25) se termine au moins avant d'atteindre le creux (19).

13. Procédé selon la revendication 11, **caractérisé en ce qu'**une course de façonnage maximale de la pluralité d'outils de façonnage (25) se termine au niveau du creux (19).

14. Procédé selon la revendication 11, **caractérisé en ce qu'**une course de façonnage maximale de la pluralité d'outils de façonnage (25) s'étend au-delà du creux (19) dans la direction d'un pied de rail (7) vers l'intérieur du matériau du champignon de rail (5) du rail (1).

15. Procédé selon l'une des revendications 1 à 7, **caractérisé en ce que** la force de façonnage (21) pulsante est appliquée au moyen d'un procédé de jet et d'une pluralité de corps projetés (29) sur la surface de roulement (10) à usiner.

16. Procédé selon la revendication 15, **caractérisé en ce que** les corps projetés (29) sont collectés, après le processus de façonnage, au moyen d'une unité de collecte (27), plus particulièrement un dispositif d'aspiration.

17. Procédé selon l'une des revendications précédentes, **caractérisé en ce que** l'amplitude de l'ondulation de surface dans la direction perpendiculaire à l'extension longitudinale de la surface de roulement (10) à usiner est réduite à une valeur d'amplitude qui se trouve dans une plage de valeurs d'amplitude, dont la limite inférieure est de 0,001 mm, plus particulièrement de 0,004 mm et dont la limite supérieure est de 0,01 mm, plus particulièrement de 0,008 mm.

18. Procédé selon l'une des revendications précédentes, **caractérisé en ce que** l'ondulation de surface est réduite et/ou modifiée jusqu'à une valeur de rugosité moyenne Ra inférieure à 0,004 mm.

19. Procédé selon l'une des revendications précédentes, **caractérisé en ce que**, lors de la première étape d'usinage, les crêtes (18) se trouvant immédiatement les unes derrière les autres dans la direction de l'extension longitudinale sont réalisés avec une valeur de distance entre eux, qui se trouve dans une plage de valeurs de distance dont la limite inférieure est de 1,0 mm, plus particulièrement de 1,8 mm, et dont la limite supérieure est de 14 mm, plus particulièrement 10 mm.

20. Procédé selon l'une des revendications précédentes, **caractérisé en ce que** la vitesse de déplacement du véhicule d'usinage (13) pendant le processus de reprofilage présente une valeur de vitesse qui se trouve dans une plage de valeurs de vitesse dont la limite inférieure est de 3 m/min, plus particulièrement de 5 m/min, et dont la limite supérieure est de 40 m/min, plus particulièrement de 30 m/min.
